# DEMANDE DE BREVET EUROPEEN

(11) **EP 0 980 778 A1**
(43) Date de publication de la demande: **23.02.2000**
(21) Numéro de dépôt: 99401541.0
(22) Date de dépôt: 22.06.1999
(51) Int. Cl.: B60J 10/04, B60J 10/00

(54) **Perfectionnements aux profilés en élastomère du type dit lécheur de bas de vitre coulissante de porte de véhicule automobile**

(30) Priorité: 18.08.1998 FR 9810506
(71) Demandeur: BTR SEALING SYSTEMS FRANCE, 92000 Nanterre (FR)
(72) Inventeur: Hardy, Francis, 76520 Boos (FR)
(74) Mandataire: Jolly, Jean-Pierre

(57) **Abrégé**

Dans ce profilé, chaque partie (5a) de la bande décorative (5) débordant latéralement au-delà de la partie (2) à section en U est équipée, sur sa face destinée à être tournée vers le panneau de porte, d'un renfort rectiligne rigide (7) qui adhère à cette face.

## Description

La présente invention concerne des perfectionnements apportés aux profilés en élastomère ou plastomère du type dit lécheur de bas de vitre ou de glace coulissante de porte de véhicule automobile.

On sait que ces profilés sont ainsi dénommés parcequ'ils comportent au moins une lèvre disposée transversalement au mouvement de la vitre coulissante, dont elle lèche une face, en particulier la face externe, pour assurer l'étanchéité suivant le bord inférieur de l'encadrement de vitre.

Ces lécheurs sont notamment en un élastomère tel que l'E.P.D.M., extrudé et vulcanisé, et ils comprennent usuellement une partie à section en U, apte à coiffer une traverse du châssis de la porte et à laquelle est attenante une lèvre destinée à lécher la face contiguë de la vitre. La partie à section en U comporte généralement une armature rigide, métallique ou en matière plastique, de section analogue, qui est destinée à pincer la traverse du châssis de porte et à rigidifier le corps du lécheur.

Le lécheur comporte habituellement une partie externe décorative en forme de bande, non attenante à la lèvre ou disposée dans le prolongement de celle-ci, et il arrive que cette bande déborde latéralement au-delà des extrémités de la traverse du châssis, sur les montants latéraux de la porte et jusqu'aux bords latéraux de celle-ci, en vue d'agrémenter son aspect général.

Dans cette éventualité, seule la bande décorative déborde latéralement, et non la totalité de la partie à section en U à armature métallique du lécheur, de sorte que, du fait de l'absence d'une partie de cette armature, les parties débordantes présentent souvent une rigidité insuffisante, en particulier pour résister à des actes de vandalisme, aux contraintes exercées par les mouvements répétés de la vitre mobile ou aux efforts exercés par des brosses de lavage du véhicule.

La présente invention vise à remédier à cet inconvénient en équipant les portions de la partie décorative souple, dite encore partie d'aspect du lécheur, qui s'étendent sur les montants latéraux de la porte, d'un élément de renfort apte à les rigidifier et à les maintenir dans le prolongement de la portion de la même partie disposée au-dessous de la vitre coulissante.

A cet effet, l'invention a pour objet un profilé en élastomère du type dit lécheur de bas de vitre coulissante de porte de véhicule automobile, le corps de ce profilé comprenant une partie à section en U et à armature rigide, apte à coiffer et pincer une traverse du châssis de porte disposée à la partie inférieure de l'encadrement de vitre, une lèvre souple, attenante à cette partie à section en U et destinée à venir s'appliquer contre la face contiguë de la vitre mobile, et une bande décorative souple, également attenante à la partie à section en U et constituant éventuellement le talon de la lèvre souple, cette bande étant destinée à venir s'appliquer contre le panneau de porte, en débordant latéralement au-delà de la partie à section en U contre au moins l'un des montants de porte, ce profilé étant caractérisé en ce que chaque partie de la bande décorative débordant latéralement au-delà de la partie à section en U est équipée, sur sa face destinée à être tournée vers le panneau de porte, d'un renfort rectiligne rigide qui adhère à cette face.

Ce renfort peut être constitué d'une pièce en métal ou en matière plastique rigide, rapportée et collée contre la face correspondante de la bande décorative.

Le renfort peut aussi être coextrudé avec la bande décorative qu'il équipe.

Le renfort a avantageusement la forme d'une bande plate ou incurvée transversalement, avec sa concavité tournée vers le panneau de porte.

Une extrémité de ce renfort sera de préférence encastrée à la manière d'un insert dans le corps du lécheur, en dehors de la partie en U, l'armature de cette partie et le renfort étant disposés parallèlement à une même direction, en vue de rendre le renfort rigidement solidaire du corps du lécheur.

D'autres caractéristiques et avantages de l'invention apparaîtront dans la description détaillée qui va suivre d'une forme de mise en oeuvre de celle-ci. Dans cette description, on se réfèrera aux dessins schématiques annexés, sur lesquels :

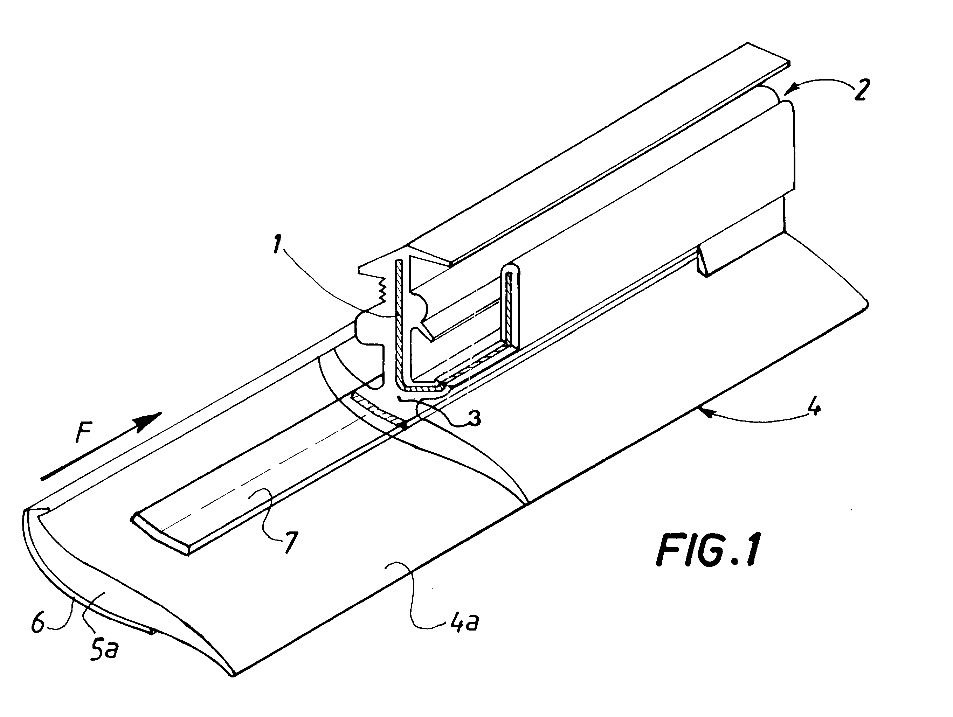

la figure 1 est une vue en perspective avec arrachement du lécheur de bas de vitre ;

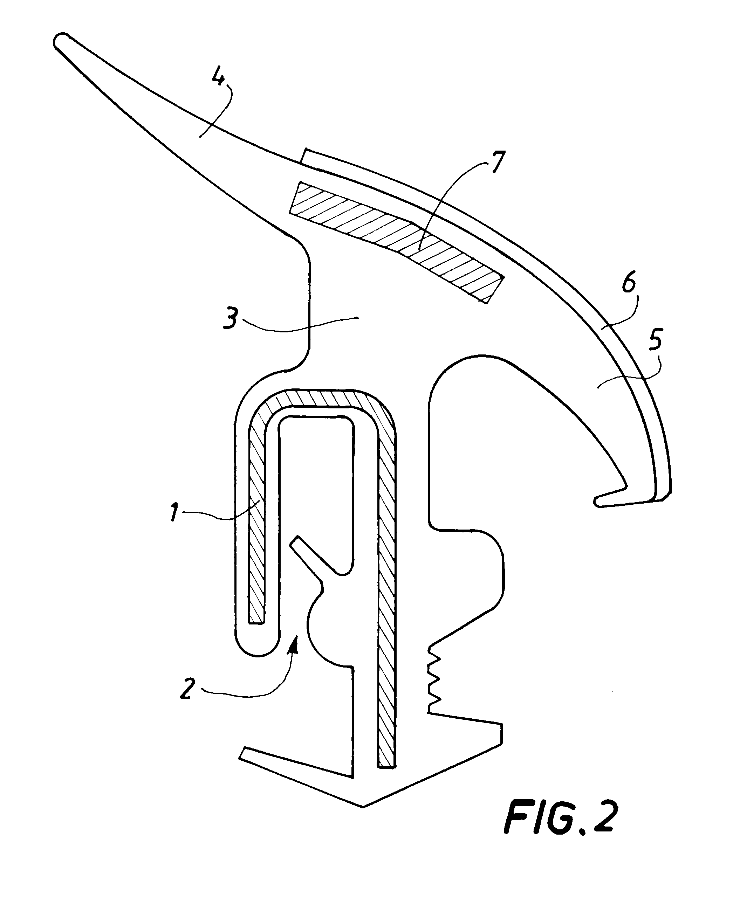

la figure 2 est une vue de bout selon la flèche F de la figure 1.

Le lécheur de bas de vitre coulissante représenté sur les dessins est d'un type général connu. Il est en un élastomère tel que l'E.P.D.M. et il comporte une armature métallique 1 à section en U, définissant une partie évidée 2, destinée à coiffer une traverse disposée au bas d'un encadrement d'une vitre coulissante d'une porte d'automobile.

Une partie 3 faisant saillie latéralement par rapport à la base du U de la partie 2 rattache cette dernière à une lèvre souple 4, destinée à lécher la face externe de la vitre coulissante et à assurer l'étanchéité en bas de la glace. Cette lèvre 4 se prolonge à sa base par un talon 5, destiné à enjoliver la porte du véhicule et gainé extérieurement dans ce but d'une mince couche 6 d'une matière thermoplastique à effet décoratif et/ou technique, coextrudée avec l'E.P.D.M.

Comme indiqué ci-dessus, aux deux extrémités de la partie 2 à section en U, la lèvre 4 et le talon 5 se prolongent par des parties attenantes, respectivement 4a, 5a, qui viennent s'appliquer contre les montants de la porte, jusqu'aux bords latéraux de celle-ci, le talon 5 et son prolongement 5a formant sur cette porte, avec la couche 6 qui les gaine, ce que l'on appelle la partie d'aspect du lécheur.

Les parties 4a et 5a ne sont plus rigidifiées par l'armature 1 de la partie 2 à section en U, qui ne se prolonge pas au-delà de la partie inférieure de l'encadrement de la vitre mobile 4. Ces parties présentent donc un certain degré de souplesse et risquent de s'écarter de la partie de la porte contre laquelle elles sont appliquées, soit en raison des contraintes diverses exercées de l'extérieur, soit à la suite d'actes de malveillance.

Pour remédier à cet inconvénient, conformément à l'invention, un renfort rigide 7 en matière plastique ou en métal est rendu rigidement solidaire de la face de la partie 5a tournée vers la partie associée du panneau de porte.

Comme représenté, ce renfort 7 a de préférence la forme d'une bande plane ou légèrement incurvée vers le panneau de porte et, pour mieux solidariser les parties débordantes 4a et 5a du corps du lécheur de vitre, l'extrémité contiguë du renfort est encastrée dans ce corps à la manière d'un insert entre la partie 2 à section en U et le reste du lécheur, l'armature 1 et le renfort 7 étant disposés parallèlement à une même direction.

Le renfort 7 peut être constitué d'une pièce rapportée et collée contre la partie 5a débordante. Il peut également être coextrudé avec la lèvre 5.

L'invention apporte donc un moyen simple et facile à mettre en oeuvre pour rigidifier la partie d'aspect des lécheurs de bas de vitre coulissante, lorsque cette partie d'aspect déborde latéralement sur la porte, au-delà de la partie inférieure de l'encadrement de vitre, sans autre moyen de fixation.

## Revendications

1. Profilé en élastomère du type dit lécheur de bas de vitre coulissante de porte de véhicule automobile, le corps de ce profilé comprenant une partie (2) à section en U et à armature rigide (1), apte à coiffer et pincer une traverse du châssis de porte disposée à la partie inférieure de l'encadrement de vitre, une lèvre souple (4), attenante à cette partie (2) à section en U et destinée à venir s'appliquer contre la face contiguë de la vitre mobile, et une bande décorative souple (5), également attenante à la partie (2) à section en U et constituant éventuellement le talon de la lèvre souple (4), cette bande (5) étant destinée à venir s'appliquer contre le panneau de porte, en débordant latéralement au-delà de la partie (2) à section en U contre au moins l'un des montants de porte, ce profilé étant caractérisé en ce que chaque partie (5a) de la bande décorative (5) débordant latéralement au-delà de la partie (2) à section en U est équipée, sur sa face destinée à être tournée vers le panneau de porte, d'un renfort rectiligne rigide (7) qui adhère à cette face.

2. Profilé selon la revendication 1, caractérisé en ce que le renfort (7) est constitué d'une pièce en métal ou en matière plastique rigide, rapportée et collée contre la face correspondante de la bande décorative.

3. Profilé selon la revendication 1, caractérisé en ce que le renfort (7) est constitué d'une pièce coextrudée avec la bande décorative qu'elle équipe.

4. Profilé selon l'une des revendications 1 à 3, caractérisé en ce que le renfort (7) a la forme d'une bande plate ou incurvée transversalement, avec sa concavité tournée vers le panneau de porte.

5. Profilé selon l'une des revendications 1 à 4, caractérisé en ce que le renfort (7) comporte une extrémité encastrée à la manière d'un insert dans le corps du lécheur, en dehors de la partie (2) à section en U, l'armature (1) de cette partie (2) et le renfort (7) étant disposés parallèlement à une même direction.
